**Europäisches Patentamt**

**European Patent Office**

**Office européen des brevets**

(19)

(11) Veröffentlichungsnummer : **0 117 393 B1**

(12) **EUROPÄISCHE PATENTSCHRIFT**

(45) Veröffentlichungstag der Patentschrift :
21.10.87

(51) Int. Cl.⁴ : **H 01 B  1/22, C 08 J  5/06**

(21) Anmeldenummer : **84100134.0**

(22) Anmeldetag : **09.01.84**

(54) **Blitzschutzverbundmaterial.**

(30) Priorität : **20.01.83 DE 3301669**

(43) Veröffentlichungstag der Anmeldung :
**05.09.84 Patentblatt 84/36**

(45) Bekanntmachung des Hinweises auf die Patenterteilung : **21.10.87·Patentblatt 87/43**

(84) Benannte Vertragsstaaten :
**CH DE FR GB IT LI SE**

(56) Entgegenhaltungen :
**EP-A- 0 005 731**

(73) Patentinhaber : **BAYER AG**
**Konzernverwaltung RP Patentabteilung**
**D-5090 Leverkusen 1 Bayerwerk (DE)**

(72) Erfinder : **Ebneth, Harold, Dr.**
**Berta-von-Suttner-Strasse 61**
**D-5090 Leverkusen (DE)**
Erfinder : **Wolf, Gerhard Dieter, Dr.**
**Wilhelm-Busch-Strasse 29**
**D-4047 Dormagen 5 (DE)**
Erfinder : **Giesecke, Henning, Dr.**
**Düsseldorfer Strasse 49**
**D-5000 Köln 80 (DE)**

**0 117 393**

**Beschreibung**

Die Erfindung betrifft die Verwendung eines Verbundmaterials aus einem metallisierten, textilen Flächengebilde von C-haltigem Fasermaterial in einer Kunststoffmatrix beim Blitzschutz.

Im Flugkörperbau werden aus Gewichtseinsparungsgründen Verbundteile aus Aramid-Filamentgarngeweben und/oder Kohlenstoff-Filamentgarngeweben in Verbindung mit Epoxidharzen bzw. Polyimid- oder Bismalimidharzen eingesetzt (25. National SAMPE-Symposium, San Diego, CA., May 6-8, 1980). Bekannt sind solche Teile für Landeklappen, Seitenleitwerk, Höhenruder und ähnliches ; in Zukunft sollen ganze Bausegmente aus diesen Verbundwerkstoffen hergestellt werden.

Als gravierendster Nachteil solcher Verbundbauteile aus Kunstharzen und Verstärkungsfasern wird ein nicht ausreichender Blitzschutz gesehen. Blitze strahlen kurzzeitig hochfrequente elektromagnetische Wellen bis in den 1 GHz-Bereich ab ; sie liegen damit im gleichen Frequenzbereich wie der NEMP.

Außerdem zeigen faserverstärkte Bauteile aus Kunststoff am Flugzeug (insbesondere beim Durchfliegen von Schnee, Hagel oder Sandstürmen) eine überraschend hohe elektrostatische Aufladung, die sich je nach Umfeld spontan entladen kann. Wegen des Kunststoffes ist im Flugzeug ein Schutz der metallischen Leitungen und elektronischen Geräte gegen eindringende elektromagnetische Wellen nicht gegeben.

Aufgabe der Erfindung ist ein Material, das einerseits so leicht ist, daß seine Verwendung gegenüber Metall und metallisierten Glasfasern zu einer Gewichtsersparnis führt, und das andererseits eine so hohe Leitfähigkeit hat, daß es auch bei starker Strombelastung eine Blitzschutzfunktion des vollständigen Bauteils übernehmen kann.

Erfindungsgemäß wird diese Aufgabe durch die Verwendung eines in eine Kunststoffmatrix eingebetteten metallisierten textilen Flächengebildes aus C-haltigem Fasermaterial als Blitzschutzverbundmaterial gelöst, welches dadurch gekennzeichnet ist, daß auf dem Flächengebilde naßchemisch-stromlos eine Nickelschicht und darauf naßchemisch-stromlos oder elektrochemisch eine Kupferschicht aufgebracht sind, wobei der Gesamtoberflächenwiderstand nach DIN 54 345 kleiner als 1 Ohm ist.

Die unmittelbar auf der Faser aufgebrachte « Basisschicht » kann sehr dünn, d. h. deutlich unter 0,5 μm, vorzugsweise unter 0,3 μm sein.

Die Abscheidung der hochleitfähigen zweiten Schicht auf der Faser bzw. dem Gewebe kann chemisch-stromlos oder auch elektrochemisch erfolgen, was zu einer sehr gleichmäßigen Ummantelung der Einzelfilamente führt und trotz hoher Leitfähigkeit die gute Flexibilität des Gewebes nur wenig stört.

Bei der naßchemisch-stromlosen Beschichtung, wie sie beispielsweise aus EP-A 0005 731 bekannt ist, ist die Einzelfaser sehr gleichmäßig mit Metall umhüllt, es kommt zu keinen Metallverklebungen im Faden und im Zwischenraum, wodurch die Flexibilität nur unwesentlich eingeschränkt wird. Charakteristisch ist auch die hohe spezifische elektrische Leitfähigkeit. Bezogen auf die abgeschiedene Metallmenge ist ein chemisch-stromlos beschichteter Gegenstand um Größenordnungen leitfähiger als wenn dieselbe Metallmenge konventionell, d. h. durch Bedampfen aufgebracht worden wäre,

Die Schichtdicke der Kupferschicht hängt von der gewünschten Schutzwirkung ab. Wird das Bauteil nur mit 50 kA-Blitzen beansprucht, ist eine 1 μm dicke Kupferschicht ausreichend.

Gegebenenfalls kann auf die Kupferschicht eine äußerste Metallschicht aus Nickel aufgebracht werden. Auf Nickeloberflächen entstehen nach kurzer Zeit beständige Oxidschichten, die sogenannte Passivierung, die auch die darunterliegende leitfähige Schicht vor Korrosion schützen. Wie in der DE-A 31 06 506 dargelegt ist, wird außerdem durch eine Nickelschicht die Faser-Matrix-Haftung positiv beeinflußt. Die äußere Nickelschicht auf dem Gewebe verbessert beispielsweise die interlaminare Scherfestigkeit um mehr als 100 %.

Ein Optimum der interlaminaren Scherfestigkeiten wird mit Nickelschichten von 0,05 bis 0,8 μm, vorzugsweise 0,1-0,2 μm erhalten.

Die erfindungsgemäß zu verwendenden textilen Flächengebilde werden aus reinen C-Fasern oder C-haltigen organischen Fasern hergestellt. Sie bestehen vorzugsweise aus graphitischen Kohlenstoff-Fasern oder Aramidfasern oder deren Kombinationen. Für den Verwendungszweck kommen aus mechanischen Festigkeitsgründen praktisch nur Filamentgarngewebe in Frage. Der Durchmesser einer Faser liegt im Bereich 3 bis 10 μm. Zur Verstärkung besonders der Ränder von Kohlenstoff-Filamentgarngeweben kann man Aramid-Filamentgarne verwenden. Im Gegensatz zu graphitischen Kohlenstoff-Fasern ist Aramid ein Nichtleiter. Bei der chemischen Metallisierung brauchen die beiden Fasertypen nicht unterschiedlich behandelt zu werden. Auf beiden Faserqualitäten können im gleichen Schritt die gleichen Metalle in den gewünschten Mengen und Schichtdicken mit gleicher Haftfähigkeit nach entsprechender Aktivierung (vorzugsweise mit metallorganischen Komplexverbindungen gemäß DE-A 3 025 307 und 3 148 280) abgeschieden werden. Man kann auch C-Fasern aufgrund ihrer Leitfähigkeit direkt elektrochemisch vernickeln. Im Hinblick auf die heute im Flugzeugbau bevorzugten Epoxid-, Bismalimid und Polyimidharze werden diese Harze als Matrix für die erfindungsgemäßen Verbundmaterialien bevorzugt.

Wegen der im folgenden beschriebenen Vorteile ist das Verbundmaterial besonders als Blitzschutzmaterial geeignet : Das im Vergleich zu Metall leichtere Material hält relativ hohe stoßartige Strombelastungen aus. Wiederholte Belastungen sind möglich. Das Material kann je nach zugrundegelegtem Risikofaktor « nach Maß » wirtschaftlich gefertigt werden. Es kann so ausgelegt werden, daß 200 kA-Blitze nicht zu einer Zerstörung der die Gesamtfestigkeit des Bauteils eingesetzten Gewebekombination, z. B. 6-lagig oder 22-lagig, führen. Bei 2 mm dicken Aluminiumblechen ist bekannt, daß bei Blitzeinschlag Löcher herausgeschmolzen werden und erst bei einer Aluminiumdicke von > 8 mm keine Schäden mehr beobachtet werden. Die elektromagnetische Schutzwirkung bleibt bei dem erfindungsgemäßen Verbundmaterial auch nach dem Blitzeinschlag erhalten und elektrostatische Aufladungen werden weiter abgeleitet. Bauteile aus dem Verbundmaterial können, auch wenn sie in Duroplasten eingebettet sind, elektrisch beheizt werden, wodurch beispielsweise eine Vereisung verhindert werden kann. Die äußerste Nickelschicht auf dem Gewebe vermeidet Korrosionsprobleme mit der Kohlenstoff-Faser, da beim direkten Kontakt zwischen Kohlenstoff-Faser und Aluminium Aluminiumcarbide, die eine mechanische Schwächung der C-Faser bewirken, gebildet werden. Auch ein direkter Kontakt zwischen Kupfer und Aluminium sollte vermieden werden. Wegen der hohen elektrischen Leitfähigkeit des metallisierten Gewebes kann auf zusätzlich eingebaute Aluminiumbleche oder -drahtnetze verzichtet werden.

Die Prüfung auf Blitzschutzeignung erfolgt sowohl am metallisierten Gewebe als auch am fertigen Bauteil. Muster mit 95 mm Durchmesser werden zwischen zwei kreisrunden Metallringen eingespannt, die als Elektrode dienen. Das Gewebe liegt auf einer isolierenden Unterlage auf. Die Hochspannungselektrode von 10 mm Durchmesser wird entweder mit leichtem Druck gegen das Gewebe gepreßt (direkter Kontakt) oder in einem Abstand von 1 mm von der Gewebeoberfläche gehalten (Spalt). Im ersten Fall erfolgt der Stromübertritt in das Gewebe auf einer Fläche von ca. 0,8 cm$^2$, im zweiten Fall praxisnah über einen Lichtbogen, der sich zwischen Elektrodenkante und Gewebeoberfläche ausbildet.

Es stand eine Stromstoßanlage mit einer Kapazität von 12,5 µF und einer max. Ladespannung von 60 kV zur Verfügung. Damit sind Stromstöße mit Scheitelwerten von über 50 kA erzeugbar. Die notwendigen Einrichtungen zur Strom- und Spannungsmessung sind in der Anlage integriert. Die Stromangaben beziehen sich auf den Scheitelwert der ersten Halbschwingung, die eine Dauer von etwa 20 µsec hat.

Die Untersuchungen erfolgen mit Stromstößen von 10, 30 und 50 kA, jeweils mit direktem Kontakt oder über Lichtbogen. Um den Einfluß von Vorbeschädigungen zu eliminieren, wird für jede Strombelastung ein unbeanspruchtes Gewebestück in die Versuchseinrichtung eingespannt. Die Stromeinleitung über einen direkten Kontakt oder über einen Lichtbogen ergibt keine signifikanten Unterschiede. Die Gebiete, in denen ein Metallabtrag erfolgen könnte, sind etwa gleich groß. Eine Beschädigung der Kohlenstoff-Filamente durch den Lichtbogen wird nicht beobachtet.

Der Widerstand zwischen Hochspannungselektrode und ringförmiger Elektrode wird mit einer Brücke gemessen. Im folgenden ist mit $R_0$ der Widerstand im Neuzustand, mit $R_1$ der Widerstand nach Strombelastung bezeichnet ; die Widerstandserhöhung durch den Stromstoß ist durch den Quotienten $R_1/R_0$ charakterisiert.

## Beispiel 1

Ein Kohlenstoff-Multifilamentgarngewebe gemäß DIN 60 900 in Leinwandbindung L 1/1, mit einem Gesamttiter der Filamente von 200 tex (g/1 000 m), bestehend aus 3 000 Einzelfilamenten, einem Flächengewicht von 200 g/m$^2$ mit jeweils 5 Fäden pro cm in Kette und Schuß, von der Größe 40 × 46 cm wird in eine Lösung von 0,25 g Butadienpalladiumdichlorid pro l in 1,1,1-Trichlorethan getaucht und getrocknet. Anschließend wird es in einem Bad, das 30 g/l Nickelchlorid, 3 g/l Dimethylaminboran und 10 g/l Zitronensäure enthält und mit Ammoniak auf pH 8,1 eingestellt wird, 4 Minuten lang bei Raumtemperatur vernickelt. Das vernickelte Gewebe wird gewaschen und anschließend in ein alkalisches Kupferbad aus 10 g/l Kupfersulfat, 15 g/l Seignette-Salz und 20 ml/l 35 gew.-%ige Formaldehydlösung, das mit Natronlauge auf pH 12,8 bis 13,8 eingestellt wird, gebracht und 15 Minuten bei Raumtemperatur verkupfert. Danach wird das metallisierte Gewebe gewaschen und abermals in dem Nickelbad 4 Minuten bei Raumtemperatur vernickelt. Anschließend wird das Gewebe gewaschen und getrocknet. Die Gewichtsaufnahme des Kohlenstoffgewebes beträgt 15 g/m$^2$. Der Widerstand einer quadratischen Fläche von 10 × 10 cm beträgt 0,1 Ohm, sowohl in Schuß- als auch in Kettrichtung. Die abgeschiedene Metallschicht auf dem Einzelfilament beträgt 0,2 µm.

Bei der simulierten Beaufschlagung des Gewebes mit Blitzen wurde die in der Tabelle dargestellte Widerstandserhöhung gefunden. Bis 60 kA ist eine Gewebezerstörung nicht aufgetreten ; es war dabei gleichgültig ob der Kontakt direkt aufgesetzt war oder ein Spalt von 1 mm Länge zugegeben wurde.

Tabelle 1

| Strom kA | Kontakt | $R_1/R_0$ ($R_0$ = 88–99 m$\Omega$) |
|---|---|---|
| 10 | direkt | 1,27 |
| 30 | direkt | 1,31 |
| 30 | Spalt | 1,34 |

**0 117 393**

Tableau 1 (Fortsetzung)

| Strom kA | Kontakt | $R_1/R_0$ ($R_0 = 88-99$ m $\Omega$) |
|---|---|---|
| 50 | direkt | 1,60 |
| 50 | Spalt | 1,94 |

## Beispiel 2

Ein Kohlenstoff-Multifilamentgarngewebe gemäß DIN 60 900 in Satinbindung S 1/7, Gesamttiter des Filaments von 200 tex (g/1 000 m), bestehend aus 3 000 Einzelfilamenten, einem Flächengewicht von 320 g/m² mit jeweils 8 Fäden pro cm in Kette und Schuß von der Größe 30 × 30 cm wird in einem kolloidalen Palladium/Zinn-Bad aktiviert und mit Natronlauge entwickelt. Das so aktivierte Gewebe wird 10 Minuten in einem Nickelbad gemäß Beispiel 1, dann 6 Stunden in einem Kupferbad gemäß Beispiel 1 und anschließend 10 Minuten in einem Nickelbad gemäß Beispiel 1 metallisiert. Nach der Metallisierung erhält man eine flexible metallisierte Kohlenstoffmatte, die eine Metall-Gewichtsaufnahme von 333 g/m² aufweist. Der Widerstand einer quadratischen Fläche von 10 × 10 cm beträgt 0,004 Ohm in Kettrichtung und 0,006 Ohm in Schußrichtung. Die gesamte abgeschiedene Metallschicht auf dem Monofilament, d. h. der Einzelfaser, beträgt 3,5 μm.

Das Gewebe wurde wie in Beispiel 1 mit simulierten Blitzen beaufschlagt ; bis 60 kA war keine Gewebezerstörung zu beobachten, wobei es gleichgültig war, ob der Kontakt direkt aufgesetzt war oder ein Spalt von 1 mm Länge zugegeben wurde.

Tabelle 2

| Strom kA | Kontakt | $R_1/R_0$ ($R_0 = 26-31$ m $\Omega$) |
|---|---|---|
| 10 | direkt | 1,00 |
| 10 | Spalt | 1,01 |
| 30 | direkt | 1,26 |
| 30 | Spalt | 1,20 |
| 50 | direkt | 1,83 |
| 50 | Spalt | 1,49 |

Die Stromeinleitung über einen direkten Kontakt oder über einen Lichtbogen (Spalt 1 mm) ergibt keine signifikanten Unterschiede. Die Gebiete, in denen ein Metallabtrag erfolgen könnte, sind etwa gleich groß. Eine Beschädigung der Kohlenstoffilamente durch den Lichtbogen wird nicht beobachtet.

Bei Einleitung von 10 kA in das metallisierte Kohlenstoffilamentgarngewebe tritt weder eine Widerstandserhöhung auf noch werden Strommarken beobachtet. Aus dem Elektrodendurchmesser von 10 mm errechnet man eine Flächenstromdichte von etwa 3 kA je cm Materialbreite.

Aus den Durchmessern der 30 kA bzw. 50 kA Strommarken ergibt sich ein Wert von ca. 4,5 kA je cm Materialbreite, der nicht zur Materialzerstörung führt.

Bei Mehrfachbelastungen des Gewebes ergibt sich ein mit steigender Stoßzahl zunehmender Widerstand, verbunden mit einer allmählichen Vergrößerung der Strommarke ; das Gewebe wird jedoch nicht, z. B. durch Herausschmelzen von Löchern, zerstört.

Auch bei sichtbarem Materialabtrag ist die beobachtete Widerstandserhöhung des Materials mäßig, z. B. bei 50 kA und direkter Kontaktierung von 28 auf 51 mΩ, bei Kontaktierung über den Lichtbogen von 31 auf 46 mΩ.

## Beispiel 3

Ein Kohlenstoff-Multifilamentgarngewebe von der Größe 40 × 46 cm gemäß DIN 60 900 in Leinwandbindung L 1/1, mit einem Gesamttiter der Filamente von 200 tex (g/1 000 m), bestehend aus 3 000 Einzelfilamenten, einem Flächengewicht von 200 g/m² mit jeweils 5 Fäden pro cm in Kette und Schuß, wird in eine Lösung von 0,25 g Butadienpalladiumdichlorid pro l in 1,1,1-Trichlorethan getaucht und

4

getrocknet. Anschließend wird es in einem Bad, das 30 g/l Nickelchlorid, 3 g/l Dimethylaminboran und 10 g/l Zitronensäure enthält und mit Ammoniak auf pH 8,1 eingestellt wird, 4 Minuten lang bei Raumtemperatur vernickelt. Das vernickelte Gewebe wird gewaschen und anschließend elektrochemisch verkupfert.

Zuerst wird in verdünnter Schwefelsäure dekapiert, dann bei 57 °C, 6-8 Volt, 3 A/dm$^2$ und einer Stromaufnahme von 100 A ca. 110 min elektrochemisch verkupert. Nach dieser Zeit hat es ca. 300 g Kupfer aufgenommen. Anschließend wird es kurz in Schwefelsäure bei Raumtemperatur getaucht und chemisch vernickelt. Der Oberflächenwiderstand dieser Probe beträgt 0,003 Ohm sowohl in Schuß — als auch in Kettrichtung.

Es wurde eine Probeplatte aus 6 Lagen Graphitfilamentgarngewebe als Prepreg hergestellt in der Art, daß die äußerste Lage das metallisierte Gewebe darstellt. Als Harzmatrix wurde Epoxidharz verwendet. In der Testanlage wurde die Probe so justiert, daß der Blitz immer die metallisierte, erste Gewebelage trifft.

Der Test wurde gemäß MIL-STD-1757, Testmethod TO 2 « Lightning Qualification Tests Techniques for Aerospace Vehicles and Hardware » 17. June 1980 und SAE AE4L Report « Lightning Fest Waveform and Techniques for Aerospace Vehicles and Hardware » 20. June 1978 durchgeführt. Bei einem simulierten Blitz von 200 KA, 2 · 10$^6$A$^2$ · s (Zone 1A) trat keine Zerstörung der Kohlenstoffverbundplatte ein. Die oberste metallisierte Lage zeigte eine Strommarke in Größe von ca. 1 cm$^2$, wobei die Metallschicht verdampft war. Das unter dem Metall liegende Kohlenstoffgewebe (1. Lage) war kaum beschädigt. Die darunter liegenden 5 weiteren Lagen aus unmetallisiertem Kohlenstoffasergewebe zeigten keine Zerstörung. Das Prüfteil war an der Oberfläche mit dem gleichen Epoxiharz imprägniert und mit einem Standard-Flugzeuglack lackiert (Epoxischicht gemäß (BMS) 10-79 Typ 2 primer von Fa. Boeing und oberster Lack ein Polyurethanlack (ca. 0,002 mm dick) gemäß (BMS) 10-60, Typ 2 von Fa. Boeing. Derartige Verbundmaterialien eignen sich beispielsweise hervorragend zur Herstellung blitzgeschützter Höhenleitwerke von Flugzeugen.

## Beispiel 4

Ein Kohlenstoffilamentgarngewebe, das Kevlarfilamentgarne aus technischen Gründen enthielt, wurde gemäß Beispiel 3 metallisiert. Die Gesamtmetallschicht betrug 180 g/m$^2$. Bei einem simulierten Blitz von 200 KA, 2 · 10$^6$A$^2$ · s und 3,6 KA, 10 coulombs, wurde mit Ausnahme der Strommarkierung keine Zerstörung des darunter liegenden Kohlenstoffilamentgarngewebes beobachtet. Die Metallschicht war an der Einschlagstelle verdampft.

## Beispiel 5

Das gleiche Kohlenstoffilamentgarngewebe wie in Beispiel 4 mit einem Metallgewicht von 100 g/m$^2$ wurde mit einem Blitz von 100 KA, 0,25 10$^6$A$^2$ · s und 3,6 KA, 10 coulombs, beaufschlagt. Mit Ausnahme der Strommarkierung wurde keine Zerstörung des Kohlenstoffilamentgarngewebes beobachtet.

Bei einem Blitz von 200 KA (wie oben) trat eine Zerstörung der ersten Lage des metallisierten Kohlenstoffgewebes im Verbundbauteil ein. Die darunter liegenden, nicht metallisierten Kohlenstoffgewebelagen zeigten visuell in den beiden ersten Lagen einen Angriff.

## Beispiel 6

Ein Kohlenstoffilamentgarngewebe mit Aramidfilamentgarnen gemäß Beispiel 4 wurde chemisch verkupfert, elektrochemisch weiter verkupfert und am Schluß zur Vermeidung der Oxidation der Kupferschicht vernickelt. Die Gesamtmetallschicht betrug 288 g/m$^2$. Es wurde einem Blitz von 200 KA unterworfen.

Mit Ausnahme der Strommarkierung wurde das gleiche Ergebnis wie in Beispiel 4 erhalten.

## Beispiel 7

Ein Aramidfilamentgarngewebe in Satinbindung 1/3 mit einem Flächengewicht von 220 g/m$^2$ wurde gemäß Beispiel 1 chemisch vernickelt auf eine Nickelschichtdicke von 0,15 μm um das Monofil herum. Anschließend wurde es nach bekannten Verfahren chemisch verkupfert auf ca. 350 g Kupfer/m$^2$ und schließlich elektrochemisch vernickelt auf insgesamt 404 g Metall/m$^2$. Dieses metallisierte Kevlargewebe wurde in eine Verbundbauplatte aus 5 Kohlenstoffgewebelagen als oberste Lage eingebettet und lackiert einem Blitz von 100 KA unterworfen. Die oberste Schicht zeigte keine Beschädigung, auch die darunter liegenden 5 Schichten zeigten keine Beschädigung.

Bei Verwendung eines 200 KA-Blitzes zeigte diese Kombination eine Blitzmarkierung von ca. 2,5 cm$^2$ an der obersten Schicht, während die darunter liegenden Kohlenstoffgewebelagen keine Beschädigung aufwiesen.

## Beispiel 8

Ein Aramidfasergewebe wird wie Beispiel 7 metallisiert, jedoch wird die Verkupferung nach

**0 117 393**

bekannten Methoden elektrochemisch in gleicher Metalldicke durchgeführt. Es wurden die gleichen Ergebnisse beim Blitztest erhalten wie im Beispiel 7.

**Patentansprüche**

1. Verwendung eines in eine Kunststoffmatrix eingebetteten metallisierten textilen Flächengebildes aus C-haltigem Fasermaterial als Blitzschutzverbundmaterial im Flugkörperbau, dadurch gekennzeichnet, daß auf dem Flächengebilde naßchemisch-stromlos eine Nickelschicht und darauf naßchemisch-stromlos oder elektrochemisch eine Kupferschicht aufgebracht sind, wobei der Gesamtoberflächenwiderstand nach DIN 54 345 kleiner als 1 Ohm ist.

2. Verwendung metallisierter Flächengebilde als Blitzschutzverbundmaterial gemäß Anspruch 1, dadurch gekennzeichnet, daß die Dicke der unmittelbar aufgebrachten Nickelschicht kleiner als 0,3 μm ist.

3. Verwendung metallisierter Flächengebilde als Blitzschutzverbundmaterial gemäß Anspruch 1, dadurch gekennzeichnet, daß auf die Kupferschicht eine vor Korrosion schützende dritte äußere Metallschicht aufgebracht ist.

4. Verwendung metallisierter Flächengebilde als Blitzschutzverbundmaterial gemäß Anspruch 3, dadurch gekennzeichnet, daß die dritte äußere Metallschicht aus Nickel besteht.

5. Verwendung metallisierter Flächengebilde als Blitzschutzverbundmaterial gemäß Anspruch 1, dadurch gekennzeichnet, daß das Textilmaterial aus graphitischen Kohlenstoff-Fasern oder Aramidfasern oder einem Gemisch aus beiden besteht.

6. Verwendung metallisierter Flächengebilde als Blitzschutzverbundmaterial gemäß Anspruch 1, dadurch gekennzeichnet, daß die Matrix aus Duroplasten, vorzugsweise aus Epoxid-, Polyimid- oder Bismalimid-Harzen, besteht.

**Claims**

1. Use of a metallised textile sheetlike structure which consists of C-containing fibre material and is embedded in a plastic matrix, as a lightning protection composite material in aircraft body construction, characterised in that a nickel layer is applied to the sheetlike structure by wet-chemical currentless means and a copper layer is applied to the nickel layer by wet-chemical currentless or electrochemical means, the total surface resistance according to DIN (German Industrial Standard) 54,345 being less than 1 ohm.

2. Use of metallised sheetlike structures as a lightning protection composite material according to Claim 1, characterised in that the thickness of the nickel layer applied directly to the fibre is less than 0.3 μm.

3. Use of metallised sheetlike structures as a lightning protection composite material according to Claim 1, characterised in that a third outer metal layer which protects against corrosion is applied to the copper layer.

4. Use of metallised sheetlike structures as a lightning protection composite material according to Claim 3, characterised in that the third outer metal layer consists of nickel.

5. Use of metallised sheetlike structures as a lightning protection composite material according to Claim 1, characterised in that the textile material consists of graphitic carbon fibres or aramide fibres or a mixture of the two.

6. Use of metallised sheetlike structures as a lightning protection composite material according to Claim 1, characterised in that the matrix consists of thermoset plastics, preferably epoxy, polyimide or bismalimide resins.

**Revendications**

1. Utilisation d'un corps plan textile métallisé en matière fibreuse contenant du carbone, noyé dans une matrice en matière plastique, comme matériau composite de protection contre la foudre dans la construction de missiles, caractérisée en ce qu'on applique sur le corps plan une couche de nickel par voie chimique humide sans passage de courant et on applique par-dessus cette couche par voie chimique humide sans passage de courant ou par voie électrochimique, une couche de cuivre, la résistance totale de surface selon la norme DIN 54 345 étant inférieure à 1 ohm.

2. Utilisation de corps plans métallisés comme matériau composite de protection contre la foudre suivant la revendication 1, caractérisée en ce que l'épaisseur de la couche de nickel directement appliquée est inférieure à 0,3 μm.

3. Utilisation de corps plans métallisés comme matériau composite de protection contre la foudre suivant la revendication 1, caractérisée en ce qu'une troisième couche métallique externe anti-corrosive est déposée sur la couche de cuivre.

4. Utilisation de corps plans métallisés comme matériau composite de protection contre la foudre

6

suivant la revendication 3, caractérisée en ce que la troisième couche métallique externe est en nickel.

5. Utilisation de corps plans métallisés comme matériau composite de protection contre la foudre suivant la revendication 1, caractérisée en ce que la matière textile est en fibres de carbone graphitique ou en fibres d'aramide ou en un mélange des deux.

6. Utilisation de corps plans métallisés comme matériau composite de protection contre la foudre suivant la revendication 1, caractérisée en ce que la matrice est en matières duroplastiques, de préférence en résines d'époxyde, de polyimide ou de bismalimide.